Europäisches Patentamt

European Patent Office

Office européen des brevets

(11) Numéro de publication: **0 430 348 A1**

## DEMANDE DE BREVET EUROPEEN

(21) Numéro de dépôt: 90203066.7

(51) Int. Cl.⁵: **B60B 7/06**

(22) Date de dépôt: **20.11.90**

(30) Priorité: 28.11.89 IT 6804989

(43) Date de publication de la demande:
**05.06.91 Bulletin 91/23**

(84) Etats contractants désignés:
**AT BE CH DE DK ES FR GB LI NL SE Bulletin
2**

(71) Demandeur: **RUSPA S.a.s. di RENZO RUSPA &
C.**

Via C. Colombo 2
I-10070 Robassomero (TO)(IT)

(72) Inventeur: **Ruspa, Renzo
Rotta Magnabergera 8
I-10070 Fiano (Torino)(IT)**

(74) Mandataire: **Patrito, Pier Franco, Dr. Ing.
Cabinet PATRITO BREVETTI Via Don Minzoni
14
I-10121 Torino(IT)**

(54) **Dispositif pour la fixation rapide et positive d'un disque enjoliveur à la jante d'une roue de
véhicule.**

(57) Un dispositif destiné à être appliqué à un disque
enjoliveur (C) pour roue de véhicule, pour en effectuer par une opération rapide la fixation positive à la
jante d'une roue qui se termine extérieurement par
un bord concave (K) en canal, comprenant une
structure (1-5) pourvue de moyens (16-17) pour son
application à l'intérieur d'un disque enjoliveur (C)
pour roue de sorte à résulter solidaire de ce disque
d'une manière permanente, des moyens de
connexion (14) pourvus sur la périphérie de la structure et déplaçables entre une position de montage,
dans laquelle ils peuvent être introduits à l'intérieur
du bord en canal (K) de la roue pour monter le
disque enjoliveur, et une position de fixation, dans
laquelle ils engagent le bord en canal (K) pour y
fixer positivement le disque enjoliveur, et un moyen
de manoeuvre (7-9) pourvu sur la structure en une
position centrale, qu'on peut manoeuvrer de l'extérieur et qui est connecté (13) aux moyens de
connexion périphériques (14) pour en commander le
déplacement collectif de la position de montage à la
position de fixation et vice-versa. Le moyen de manoeuvre (7-9), pourvu d'une poignée de commande
manuelle (9) qu'on peut rabattre, est accessible à
travers une fenêtre centrale, (F) du disque enjoliveur,
et cette fenêtre est couverte par une coupe (M)
pendant la marche.

FIG. 2

EP 0 430 348 A1

# DISPOSITIF POUR LA FIXATION RAPIDE ET POSITIVE D'UN DISQUE ENJOLIVEUR A LA JANTE D'UNE ROUE DE VEHICULE

La présente invention se réfère à un dispositif destiné à être appliqué à un disque enjoliveur pour roue de véhicule, pour en effectuer par une opération rapide la fixation positive à la jante d'une roue, cette jante se terminant extérieurement par un bord concave en canal.

En maintes cas, spécialement pour des véhicules légers, les disques enjoliveurs peuvent être appliqués aux roues par des dispositifs de fixation à enclanchement élastique disposés de sorte à engager des contre-dépouilles présentées par les jantes des roues, mais en d'autres cas, spécialement pour des véhicules lourds, par exemple les véhicules industriels, on exige que la fixation des disques enjoliveurs sur les roues soit positive. Dans ces cas on fait recours, d'habitude, à des étriers spéciaux qui sont serrés sous les boulons de fixation des roues et qui sont pourvus de moyens pour recevoir, à leur tour, la fixation des disques enjoliveurs. Toutefois ces systèmes ne sont pas satisfaisants, d'un côté parce qu'il portent à une complication indésirable des opérations de montage et de démontage des roues, lesquelles en ce cas intéressent aussi les étriers de support des enjoliveurs, et d'autre côté parce que les moyens de fixation des roues dans les différents véhicules montrent de nombreuses configurations différentes, et donc, pour l'application des disques enjoliveurs, l'on doit fabriquer et emmagasiner de nombreux assortiments d'étriers différents, entre lesquels il faut faire un choix approprié lors de l'application des enjoliveurs.

Suivant le document EP-A-0.300.530 de la même Demanderesse, un disque enjoliveur peut être fixé d'une façon positive sur la roue d'un véhicule moyennant un système comprenant nombre de dispositifs de connexion disposés le long de la périphérie du disque et qu'on peut manoeuvrer singulièrement pour réaliser l'engagement positif de chacun d'en-tr'eux avec le bord en canal de la roue. Ce système est efficace et, en général, satisfaisant, mais il n'autorise pas une opération rapide et exige l'emploi d'outils, et de plus les différents dispositifs de connexion doivent présenter des parties accessibles pour la manoeuvre, et donc visibles, ce qui en certains cas n ' est pas désirable pour des raisons esthétiques.

Le but de la présente invention est de proposer un dispositif de fixation positive des disques enjoliveurs pour roues qui, tout en conservant les qualités d'efficacité et de fonctionnement rationnel du système suivant le document cité, autorise l'exécution de la fixation positive d'un disque enjoliveur à une roue par une seule opération qu'on peut exécuter rapidement et facilement, le cas échéant même sans l'emploi d'outils; et qui, de plus, si on le désire, peut être complètement dissimulé en condition de marche sans présenter, dans cette condition, aucune partie visible.

Ce but est atteint, suivant l'invention, en ce que le dispositif de fixation comprend une structure pourvue de moyens pour son application à l'intérieur d'un disque enjoliveur pour roue de sorte à résulter solidaire de ce disque d'une manière permanente, des moyens de connexion pourvus sur la périphérie de ladite structure et déplaçables entre une position de montage, dans laquelle ils peuvent être introduits à l'intérieur du bord en canal de la roue pour monter le disque enjoliveur, et une position de fixation, dans laquelle ils engagent ledit bord en canal pour y fixer positivement le disque enjoliveur, et un moyen de manoeuvre pourvu sur ladite structure en une position centrale, accessible de l'extérieur à travers une fenêtre centrale du disque enjoliveur et connecté audits moyens de connexion périphériques pour en commander le déplacement collectif de la position de montage à la position de fixation et vice-versa.

Par cette disposition, le disque enjoliveur, préalablement pourvu du dispositif de fixation appliqué intérieurement, et avec ses moyens de connexion disposés dans la position de montage, peut être appliqué à une roue en l'insérant dans la position correcte sur cette roue, et ensuite il peut être fixé en agissant sur le moyen de manoeuvre central de sorte à déplacer, par une seule opération, tous les moyens de connexion périphériques de la position de montage à la position de fixation, ainsi les engageant dans le bord en canal de la roue, de manière qu'on obtient la fixation positive du disque enjoliveur à la roue. La manoeuvre opposée permet de détacher le disque enjoliveur de la roue. De cette manière le dispositif de manoeuvre peut être actionné par une seule manoeuvre rapide. Par un choix approprié du moyen de manoeuvre central, cette opération peut être effectuée sans faire recours à aucun outil. Les moyens de connexion périphériques et leurs connexions au moyen de manoeuvre central peuvent être dissimulés facilement, de façon complète, par un dessin approprié du disque enjoliveur, et seulement le moyen de manoeuvre central est visible de l'extérieur dans le disque enjoliveur monté sur la roue, à travers la fenêtre centrale du disque enjoliveur. A son tour cette fenêtre, en considération de ses dimensions réduites et de sa position centrale, peut être dissimulée facilement, pendant la marche, moyennant une petite coupe appliquée par enclanchement élastique ou par tout autre moyen connu, dépourvu de parties visibles de l'extérieur. Ces moyens de connexion connus, qui ne pourraient pas être acceptés pour le disque enjoliveur tout entier d'un véhicule non léger, en vue de ses dimensions et de son poids, sont parfaitement satisfaisants pour une coupe centrale petite et légère servant à dissimuler le moyen de manoeuvre. En particulier, cette coupe peut être constituée par le support de la marque du véhicule, laquelle dans la plupart des cas doit être appliquée au disque enjoliveur.

Ces caractéristiques et d'autres et les avantages de l'objet de l'invention ressortiront plus clairement de la suivante description d'un mode de réalisation, ayant le caractère d'un exemple non limitatif, représenté schématiquement dans les dessins annexés, dans lesquels:

Fig. 1 montre en vue frontale et à une échelle réduite le dispositif de fixation suivant l'invention, qui peut être appliqué à un disque en joliveur, non représenté;

Fig. 2 en montre à une échelle plus grande une section partielle, faite suivant la ligne II-II de la figure 1, et elle montre aussi le disque enjoliveur et une partie du profil de la roue;

Fig. 3 montre singulièrement un moyen de connexion périphérique ainsi que sa connexion au moyen de manoeuvre central, cet ensemble étant visible seulement en partie dans la figure 2;

Fig. 4 montre l'ensemble de la figure 3, vu de la partie interne du dispositif, qui est destinée à être dirigée vers la roue;

Fig. 5 montre une section, faite suivant la ligne V-V de la figure 2, des moyens présentés par la structure du dispositif pour supporter et guider l'ensemble suivant les figures 3 et 4;

Fig. 6 montre en vue frontale un élément appliqué à la structure, faisant partie des moyens pour fixer le dispositif à l'intérieur du disque enjoliveur pour roue;

Figs. 7 et 8 montrent deux sections faites respectivement suivant les lignes VII-VII et VIII-VIII de la figure 6; et

Fig. 9 montre, vue de l'intérieur, un moyen de réglage faisant partie du moyen central de manoeuvre du dispositif.

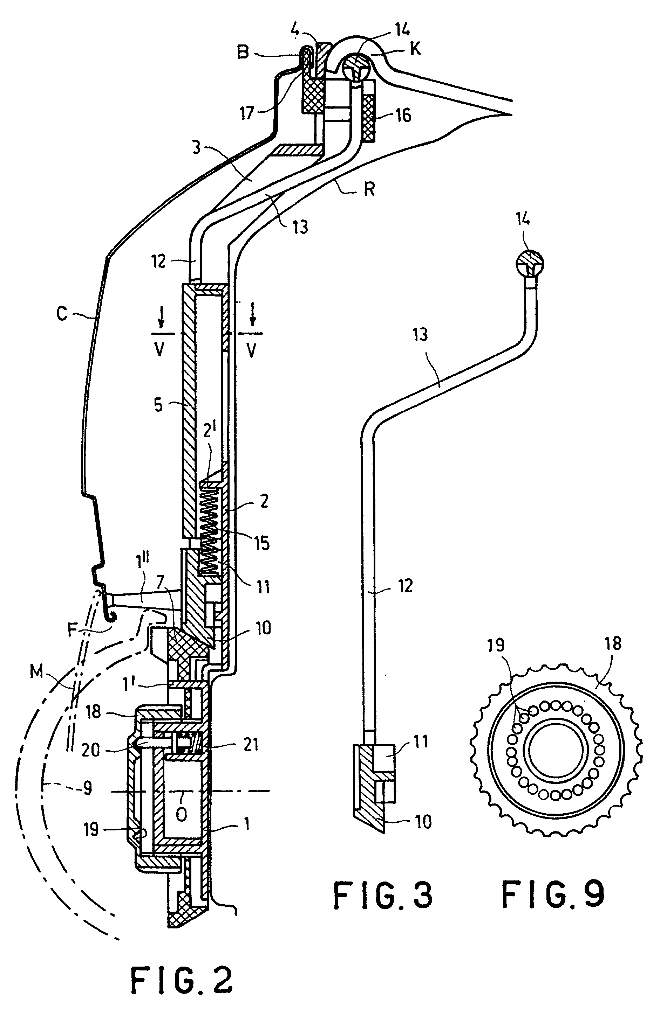

Comme on le voit dans la figure 2, le disque enjoliveur C représenté présente un bord périphérique B, destiné à être disposé voisin du bord en canal K de la jante d'une roue, dont le profil extérieur d'encombrement est montré schématiquement en R. Le disque enjoliveur C présente une fenêtre centrale F, destinée d'habitude à être fermée par une coupe centrale (montrée schématiquement en M), laquelle avantageusement peut être constituée par le support d'une marque, dont l'application est presque toujours prévue en cette position. La présence de cette fenêtre centrale est nécessaire pour l'application de l'invention, tandis que la conformation de toutes les autres parties du disque enjoliveur est laissée entièrement libre et peut être dessinée d'une façon arbitraire, pour des raisons soit esthétiques que techniques. On doit donc comprendre que la représentation schématique d'une forme particulière de disque en-joliveur a seulement un but d'explication, mais que l'invention peut être appliquée à des disques enjoliveurs ayant des formes généralement quelconque. D'une façon similaire, par le profil R de la roue représentée on comprend qu'il s'agit d'une roue antérieure, mais on doit comprendre que l'invention est également applicable, d'une façon evidente, aux disques enjoliveurs destinés à des roues postérieures jumelées, dont la partie R ne fait pas saillie.

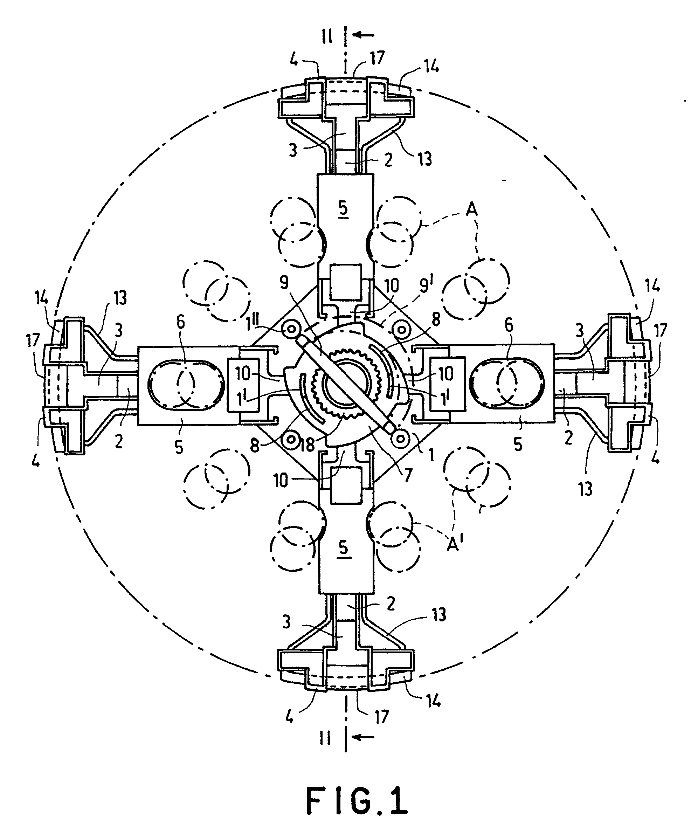

Faisant référence aux figures 1 et 2, la structure du dispositif (qui est fixée au disque enjoliveur C de la manière décrite plus avant) est constituée par une partie centrale 1 qui s'étend à former un certain nombre de bras radiaux 2, dans cet exemple quatre bras disposés à 90° l'un par rapport à l'autre, lesquels sont couverts en partie par des plaques de couverture 5. Toutefois le nombre des bras pourrait être différent de quatre, et leur distance angulaire mutuelle ne doit pas nécessairement être uniforme. Comme règle, la roue R est pourvue de moyens de montage A ou bien A', qui font saillie par rapport à son profit, et la présence et disposition de ces moyens de montage conditionne la disposition des bras 2 de la structure du dispositif. Dans l'exemple représenté, qui se réfère à une roue ayant dix moyens de montage A ou A', dans le but de ne pas interférer avec ces moyens de montage les bras 2 du dispositif qui, suivant la figure 1, s'étendent verticalement, ainsi que les plaques de couverture relatives, montrent des encoches latérales en correspondence des moyens de montage de la roue, tandis que les bras 2 qui, suivant la même figure, s'étendent horizontalement, et leur plaques de couverture 5, montrent des fenêtres 6 qui peuvent être traversées par les moyens de montage de la roue. D'autres dispositions peuvent être prises quand le nombre et/ou la disposition des moyens de montage de la roue et/ou des bras radiaux du dispositif sont différents par rapport à l'exemple décrit.

Les bras radiaux 2 s'étendent à former des segments périphériques 3 qui se terminent pas des moyens d'appui 4 disposés pour trouver un appui convenable contre le bord en canal K de la roue. Dans un dispositif comme celui qu'on a montré, qui est destiné à une roue antérieure dont le profit R fait considérable saillie par rapport au bord en canal K, les segments périphériques 3 des bras radiaux 2 sont inclinés d'une manière adéquate, comme le montre la figure 2, tandis qu'ils ne demandent pas d'être inclinés, ou bien ils demandent une inclinaison plus faible, dans les dispositifs destinés à des roues postérieures jumelées, dont le profit ne fait pas saillie par rapport au bord en canal.

La partie centrale 1 de la structure du dispositif supporte avec possibilité de rotation une came 7, laquelle, comme le montre la figure 1, a une disposition de lobes qui correspond en nombre et en positions angulaires aux bras 2 du dispositif. Le champ de rotation de la came 7 est limité, de préférence, par une paire de fentes 8 de la came, dans lesquelles engagent des saillies 1' de la partie centrale 1 de la structure. Pour commander la rotation de la came 7 est prévue une poignée 9 qui, dans sa position opérative, fait saillie à travers la fenêtre centrale F du disque enjoliveur C, de sorte qu'elle peut être manoeuvrée facilement, mais qui peut être rabattue contre la came 7 en une position de repos 9' (figure 1).

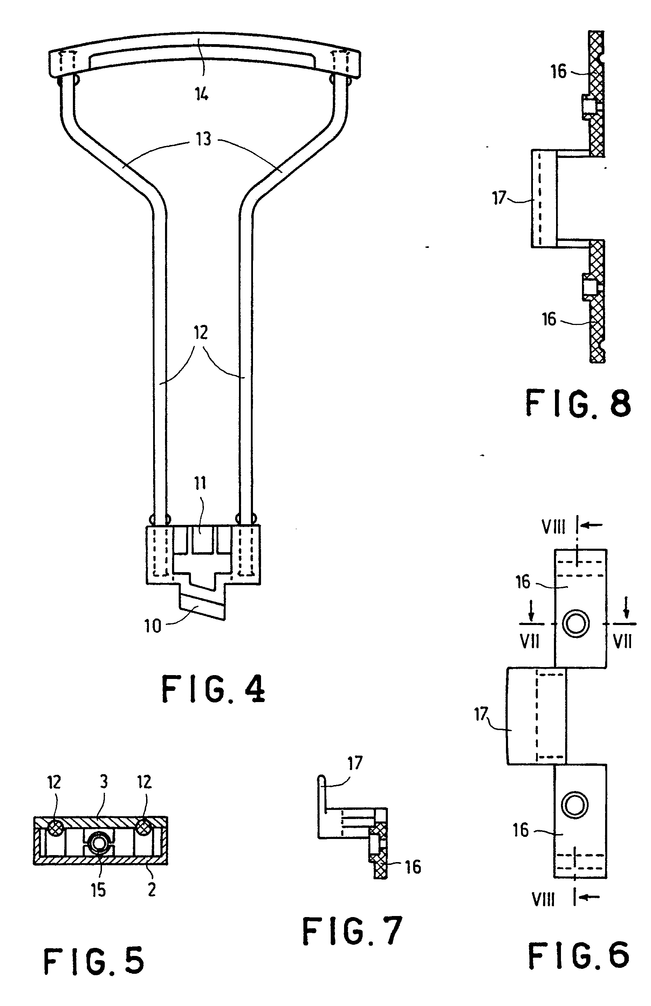

Contre les lobes de la came 7 s'appuyent des poussoirs 10 constitués chacun par un bloc, par exemple en matière plastique, constituant aussi un siège de ressort 11. Dans le bloc 10 sont incorporées les extrémités internes de deux tiges 12, par exemple en rond métallique, qui s'étendent en dehors le long des bras 2 et, en suivant par des parties inclinées 13 les segments inclinés 3 des bras 2, se terminent par des extrémités externes sur lesquelles est co-moulé un élément d'engagement arqué 14. Ce dernier est conformé de sorte à pouvoir engager d'une façon efficace dans la concavité du bord en canal K de la roue. Des ressorts 15, insérés entre les sièges de ressort 11 des blocs de poussoir 10 et des saillies 2' des bras 2, sollicitent l'ensemble 10-14 des figures 3 et 4 vers la oame 7, ainsi retenant les poussoirs 10 en contact avec les lobes de la came. Les tiges 12 sont opportunément supportées et guidées en des sièges correspondants des bras 2 et des plaques de couverture 5 relatives, comme le montre la figure 5. Bien entendu, dans les cas, comme l'exemple représenté, où les bras de la structure du dispositif ont deux formes différentes, la conformation des tiges 12 doit être diversifiée d'une façon correspondante.

De la description précédente on comprend que, en faisant tourner la came 7 moyennant la poignée 9 dans un sens ou dans l'autre, tandis que les ressorts 15 retiennent les poussoirs 10 appuyés contre les lobes de la came, on peut déplacer vers l'extérieur collectivement tous les ensembles 10-14 du dispositif, ou bien permettre que les ressorts 15 les déplacent vers l'intérieur. Les parties sont dimensionnées de sorte que, dans la position la plus déplacée vers l'extérieur, les moyens d'engagement 14 sont insérés avec compression dans le bord en canal K de la roue, de sorte à solidariser à la roue la structure du dispositif, tandis que dans la position la plus déplacée vers l'intérieur ces moyens d'engagement peuvent être dégagés du bord en canal K, ainsi autorisant le démontage de la structure du dispositif de la roue. Partant la rotation de la came 7, produite par la poignée 9, permet de fixer à la roue ou de dégager de la roue, par une seule opération facile et rapide, la structure du dispositif ainsi que le disque enjoliveur qui lui est fixé. De plus, dans le mode de réalisation décrit, dans lequel le moyen de manoeuvre central comporte une poignée 9, cette opération peut être accomplie sans faire recours à aucun outil.

La fixation du disque enjoliveur C à la structure du dispositif est effectuée moyennant des éléments de connexion représentés en particulier dans les figures 6 à 8, comprenant des plaques de support 16 et des languettes de connexion 17. Les plaques de support 16 sont destinées à être fixées aux portions externes des bras 2-3, à l'intérieur des éléments d'appui 4, tandis que les languettes de connexion 17 sont disposées pour engager le bord périphérique B, replié vers l'intérieur, du disque enjoliveur C. Les éléments 16-17 sont disposés sur les bras du dispositif en les tenant quelque peu déplacés vers l'intérieur, et ensuite il sont glissés radialement vers l'extérieur en les engageant dans le bord B du disque enjoliveur, et ils sont fixés en cette position. Cette disposition assure une connexion stable et sûre entre le disque enjoliveur C et la structure 1-3 du dispositif de fixation. Toutefois on doit comprendre que cette disposition peut être remplacée par toute autre disposition capable de réaliser la même fonction de connexion. Cette connexion est destinée à demeurer permanente, c'est à dire qu'elle ne doit pas être dégagée lorsque te disque enjoliveur est monté sur la roue ou démonté de la roue.

De plus, la connexion périphérique décrite peut être · avantageusement complétée par une connexion directe de la partie centrale du disque enjoliveur C à ta partie centrale 1 de la structure, par exemple moyennant des vis engagées en des saillies 1" de ladite partie centrale 1.

Il est évident que la fenêtre centrale F du disque enjoliveur C, laquelle doit être ouverte lorsqu'on doit actionner le moyen central de manoeuvre, pendant la marche peut être fermée par une coupe ou couvercle approprié, qui est indiqué schématiquement en M dans la figure 2, et qui peut être appliqué d'une façon quelconque. Dans la forme représentée, qui comporte une poignée 9, cette fermeture de la fenêtre F est possible seulement lorsque la poignée a été rabattue dans sa position de repos 9'. De cette façon on peut dissimuler aussi les éléments de connexion directe entre la partie centrale du disque enjoliveur C et la partie centrale I de la structure du dispositif de fixation. Cette coupe ou couvercle M peut être constituée par le support d'une marque qui, en général, doit être appliquée au centre du disque enjoliveur.

Dans l'exemple représenté on a aussi prévu un dispositif ayant le but de permettre un réglage de la position opérative des éléments d'engagement 14. Ce réglage peut être à propos pour compenser les tolérances dans la fabrication de la roue du véhicule, en vue desquelles le rayon du bord en canal K peut se modifier d'un millimètre ou même plus.

Pour réaliser ce réglage, les surfaces de contact entre les lobes de la came 7 et les éléments de poussoir 10 sont inclinées par rapport à l'axe O du dispositif, comme on peut l'observer dans la figure 2, et la came 7 est montée sur la partie centrale 1 de la structure du dispositif avec une certaine possibilité de déplacement en direction axiale, tandis qu'une douille de réglage 18 est vissée sur la partie centrale 1 de -a structure et contrôle le déplacement de la came 7 vers l'extérieur. Partant, en vissant plus ou moins la douille 18, et donc en déplaçant axialement la came 7, en vertu de 1'inclinaison de la surface de contact entre cette dernière et les poussoirs 10 on actionne un déplacement collectif des poussoirs 10 et des ensembles 10-14, vers l'extérieur ou bien vers l'intérieur. De cette façon on peut adapter correctement la position opérative des éléments d'engagement au rayon effectif du bord en canal K. La position de réglage de la douille 18 est ensuite stabilisée moyennant une goupille 20 montée dans la partie centrale I de la structure, poussée vers l'extérieur par un ressort 21 et capable d'engager avec déclanchement élastique l'une des nombreuses cavités 19 présentées vers l'intérieur par la douille 18.

La came 7 doit être retenue ensuite dans la position de fixation du dispositif. Cet effet peut être confié au coincement entre la came et les éléments de poussoirs coopérant, mais il peut être aussi obtenu ou supporté en ajoutant des moyens positifs ou élastiques de retenue en position de la came 7, ou bien en conformant cette came de sorte à en rendre irréversible le déplacement dans la position de fixation.

Le choix d'une poignée comme organe de commande du moyen de manoeuvre central permet d'éviter l'emploi d'outils, mais lorsque cela n'est pas désiré le moyen de manoeuvre central, dans l'exemple la came 7, peut être pourvu d'un organe d'accouplement pour une clef ou pour un autre outil de manoeuvre similaire.

**Revendications**

1. Dispositif destiné à être appliqué à un disque enjoliveur (C) pour roue de véhicule, pour en effectuer par une opération rapide la fixation positive à la jante d'une roue, cette jante se terminant extérieurement par un bord concave (K) en canal, caractérisé en ce qu'il comprend une structure (1-5) pourvue de moyens (16-17,1") pour son application à l'intérieur d'un disque enjoliveur (C) pour roue de sorte à résulter solidaire de ce disque d'une manière permanente, des moyens de connexion (14) pourvus sur la périphérie de ladite structure (1-5) et déplaçables entre une position de montage, dans laquelle ils peuvent être introduits à l'intérieur du bord en canal (K) de la roue pour monter le disque enjoliveur (C), et une position de fixation, dans laquelle ils engagent ledit bord en canal (K) pour y fixer positivement le disque enjoliveur (C), et un moyen de manoeuvre (7-9) pourvu sur ladite structure (1-5) en une position centrale, accessible de l'extérieur à travers une fenêtre centrale (F) du disque enjoliveur (C) et connecté audits moyens de connexion périphériques (14) pour en commander le déplacement collectif de la position de montage à la position de fixation et vice-versa.

2. Dispositif de fixation suivant la revendication t, caractérisé en ce que ladite structure (1-5) comprend une partie centrale (1), supportant principalement le moyen de manoeuvre (7-9), et nombre de bras (2) au moins approximativement radiaux, supportant lesdits moyens périphériques de connexion (14) ainsi que les connexions (13) de ces derniers au moyen de manoeuvre central (7-9).

3. Dispositif de fixation suivant la revendication 1, caractérisé en ce que ladite structure (1-5) comprend aussi des moyens périphériques (4) d'appui contre le bord en canal (K) de la roue.

4. Dispositif de fixation suivant la revendication I, caractérisé en ce que ledit moyen de manoeuvre central (7-9) comprend une came (7) à plusieurs lobes pourvue de moyens manuels (9) de manoeuvre, et nombre d'éléments de poussoir (10) coopérant avec les lobes de ladite came et connectés auxdits moyens de connexion périphériques (13-14).

5. Dispositif de fixation suivant la revendication 4, caractérisé en ce que les connexions (13) entre les éléments de poussoir (10) et les moyens de connexion périphériques (14) comprennent des ressorts (15) disposés pour solliciter les éléments de poussoir (10) en contact avec les lobes correspondants de la came (7).

6. Dispositif de fixation suivant la revendication 4, caractérisé en ce que ladite came de manoeuvre (7) est pourvue de moyens (8,1') qui en limitent la course utile de rotation.

7. Dispositif de fixation suivant la revendication 4, caractérisé en ce que lesdits moyens manuels (9) de manoeuvre de la came (7) sont constitués par une poignée (9) qu'on peut déplacer entre une position opérative faisant saillie et une position de repos (9') rabattue contre la came (7).

8. Dispositif de fixation suivant la revendication 4, caractérisé en ce que lesdits moyens manuels (9) de manoeuvre de la came (7) sont constitués par un organe d'accouplement pour une clef ou pour un outil similaire.

9. Dispositif de fixation suivant la revendication 4, caractérisé en ce que ladite came (7) et lesdits éléments de poussoir (10) ont des surfaces de contact mutuel inclinées par rapport à l'axe (0) du dispositif, que la came (7) est supportée avec une possibilité de déplacement axial, et qu'il est prévu un moyen (18) disposé pour régler la position axiale de la came (7), de sorte à régler la -position opérative des moyens de connexion périphériques (14).

10. Dispositif de fixation suivant la revendication 9, caractérisé en ce que ledit moyen (18) pour régler la position de la came (7) est une douille (18) vissée sur la structure (1) du dispositif et pourvue de moyens (19-21) pour la retenir dans la position réglée atteinte.

11. Dispositif de fixation suivant la revendication 1, caractérisé en ce que lesdits moyens de connexion périphériques (14) sont constitués par des éléments arqués (14) reliés par des tiges (13) substantiellement radiales au moyen central de manoeuvre (7-9).

12. Dispositif de fixation suivant la revendication 11, caractérisé en ce que chaque élément arqué (14) de connexion est co-moulé sur les extrémités externes desdites tiges (13) substantiellement radiales, sur les extrémités internes desquelles est moulé un élément de poussoir (10) faisant partie du moyen central de manoeuvre.

13. Dispositif de fixation suivant la revendication 2, caractérisé en ce qu'il comprend des éléments (16-17) de liaison de la structure (1--5) au disque enjoliveur (C) pour roue, ayant une partie de support (16) qu'on peut connecter aux portion périphériques des bras (2) de la structure, et une languette (17) qu'on peut insérer dans un bord périphérique (B), plié à l'intérieur, du disque enjoliveur (C).

FIG.1

FIG.2

FIG.3

FIG.9

FIG. 4

FIG. 8

FIG. 5

FIG. 7

FIG. 6

**Office européen
des brevets**

# RAPPORT DE RECHERCHE
## EUROPEENNE

Numéro de la demande

**EP 90 20 3066**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 567 077 (MATHOM) <br> * page 6, lignes 3 - 18; figures 4, 5 * <br> – – – | 1,2,3,4,5, 8,11 | B 60 B <br> 7/06 |
| Y | DE-A-1 939 902 (PRESSWELD) <br> * page 10, ligne 22 - page 11, ligne 22 ** page 13, ligne 11 - page 14, ligne 25; figures 5, 10--12 * <br> – – – | 1,2,4,6,8 | |
| Y | DE-A-3 417 968 (LAZAR) <br> * page 5, ligne 19 - page 7, ligne 33; figures 1, 3 * <br> – – – | 1,2,4,6,8 | |
| A | US-A-2 012 735 (SWARTZ) <br> * page 1, colonne de gauche, ligne 48 - colonne de droite, ligne 19; figure 1 * <br> – – – – – | 1,5 | |

| | DOMAINES TECHNIQUES RECHERCHES (Int. Cl.5) |
|---|---|
| | B 60 B <br> B 62 D <br> B 60 C |

Le présent rapport de recherche a été établi pour toutes les revendications

| Lieu de la recherche | Date d'achèvement de la recherche | Examinateur |
|---|---|---|
| La Haye | 07 mars 91 | AYITER I. |